# EUROPEAN PATENT APPLICATION

(11) **EP 2 787 343 A1**
(43) Date of publication of application: **08.10.2014**
(21) Application number: 14163730.6
(22) Date of filing: 07.04.2014
(51) Int. Cl.: G01N 27/327

(54) **Analyte meter for test strips**

(30) Priority: 05.04.2013 US 201313857280
(71) Applicant: Lifescan Scotland Limited, Inverness IV2 3ED (GB)
(72) Inventor: Lloyd, Tim, Inverness IV2 3ED (GB); Mccoll, David, Inverness IV2 3ED (GB); Smith, Antony, Inverness IV2 3ED (GB); Guthrie, Brian, Inverness IV2 3ED (GB); Elder, David, Inverness IV2 3ED (GB); Massari, Rossano, 20052 Monza (IT); Forlani, Christian, 20126 Milano (IT)
(74) Representative: Carpmaels & Ransford LLP

(57) **Abstract**

An analyte meter having a test strip port is configured to transmit an electric signal through a received test strip with a sample. A pair of electrodes apply the electric signal and receive an electrical response from the test strip. A processing unit analyzes the electrical response and uses the response to determine an analyte level of the sample.

## Description

### Technical Field

This application generally relates to the field of blood glucose measurement systems and more specifically to portable analyte meters that are configured to adjust glucose measurement based on a hematocrit level.

### Background

Blood glucose measurement systems typically comprise an analyte meter that is configured to receive a biosensor, usually in the form of a test strip. Because many of these systems are portable, and testing can be completed in a short amount of time, patients are able to use such devices in the normal course of their daily lives without significant interruption to their personal routines. A person with diabetes may measure their blood glucose levels several times a day as a part of a self management process to ensure glycemic control of their blood glucose within a target range. A failure to maintain target glycemic control can result in serious diabetes-related complications including cardiovascular disease, kidney disease, nerve damage and blindness.

There currently exist a number of available portable electronic devices that can measure glucose levels in an individual based on a small sample of blood. During an assay of the sample, a person is required to prick their finger and then make finger contact with the test strip in order to apply the blood sample. The results of the testing can be significantly affected due to electrical influences from the physical finger contact upon the test strip. Errors in measurement may be caused by the operating frequency characteristics of test strips and strip port connection circuits being electrically altered by the added electrical properties of the human finger contacting the test strip. Because physical contact between a user's finger and the test strip is required in order to collect a sample for measurement, it is preferable that improvements in error avoidance be directed toward measurement processes rather than modifying well established procedures followed by users to provide a blood sample.

### Brief Description Of The Drawings

The accompanying drawings, which are incorporated herein and constitute part of this specification, illustrate presently preferred embodiments of the invention, and, together with the general description given above and the detailed description given below, serve to explain features of the invention (wherein like numerals represent like elements).
FIG. 1A illustrates a diagram of an exemplary test strip based blood analyte measurement system;
FIG. 1B illustrates a diagram of an exemplary processing system of the test strip based blood analyte measurement system of FIG. 1A;
FIG. 2 illustrates a block diagram of an exemplary analog front end of the processing system of FIG. 1B;
FIGs. 3A - 3B illustrate a frequency analysis demonstrating phase and magnitude effects, respectively, of finger contact on a test strip with a blood sample;
FIG. 4 illustrates a circuit simulation model of a finger contacting a test strip containing a blood sample;
FIG. 5 illustrates exemplary phase and magnitude outputs of the circuit simulation model of FIG. 4; and
FIG. 6 illustrates a flow chart of a method of operating the blood analyte measurement system of FIGs. 1A -1B.

### Modes of Carrying Out the Invention

The following detailed description should be read with reference to the drawings, in which like elements in different drawings are identically numbered. The drawings, which are not necessarily to scale, depict selected embodiments and are not intended to limit the scope of the invention. The detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention.

As used herein, the terms "patient" or "user" refer to any human or animal subject and are not intended to limit the systems or methods to human use, although use of the subject invention in a human patient represents a preferred embodiment.

The term "sample" means a volume of a liquid, solution or suspension, intended to be subjected to qualitative or quantitative determination of any of its properties, such as the presence or absence of a component, the concentration of a component, e.g., an analyte, etc. The embodiments of the present invention are applicable to human and animal samples of whole blood. Typical samples in the context of the present invention as described herein include blood, plasma, red blood cells, serum and suspension thereof.

The term "about" as used in connection with a numerical value throughout the description and claims denotes an interval of accuracy, familiar and acceptable to a person skilled in the art. The interval governing this term is preferably ± 10 %. Unless specified, the terms described above are not intended to narrow the scope of the invention as described herein and according to the claims.

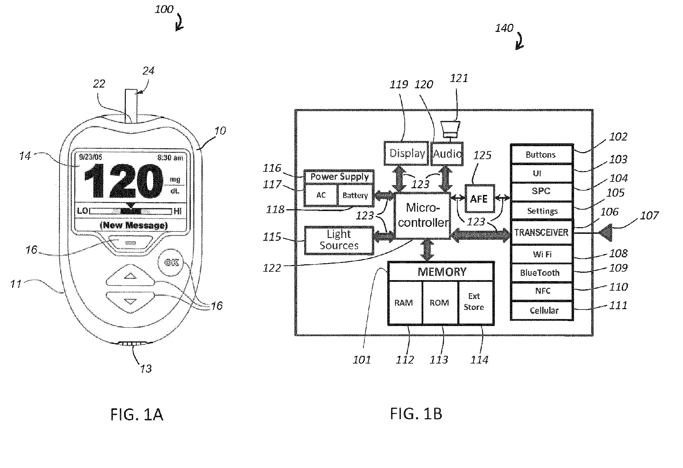

Figure 1A illustrates an analyte measurement system 100 that includes an analyte meter 10. The analyte meter 10 is defined by a housing 11 that retains a data management unit 140 and further includes a port 22 sized for receiving a biosensor. According to one embodiment, the analyte meter 10 may be a blood glucose meter and the biosensor is provided in the form of a glucose test strip 24 inserted into test strip port connector 22 for performing blood glucose measurements. The analyte meter 10 includes a data management unit 140, Fig. 1B, disposed within the interior of the meter housing 11, a plurality of user interface buttons 16, a display 14, a strip port connector 22, and a data port 13, as illustrated in Figure 1A. A predetermined number of glucose test strips may be stored in the housing 11 and made accessible for use in blood glucose testing. The plurality of user interface buttons 16 can be configured to allow the entry of data, to prompt an output of data, to navigate menus presented on the display 14, and to execute commands. Output data can include values representative of analyte concentration presented on the display 14. Input information, which is related to the everyday lifestyle of an individual, can include food intake, medication use, occurrence of health check-ups, and general health condition and exercise levels of an individual. These inputs can be requested via prompts presented on the display 14 and can be stored in a memory module of the analyte meter 10. Specifically and according to this exemplary embodiment, the user interface buttons 16 include markings, e.g., up-down arrows, text characters "OK", etc, which allow a user to navigate through the user interface presented on the display 14. Although the buttons 16 are shown herein as separate switches, a touch screen interface on display 14 with virtual buttons may also be utilized.

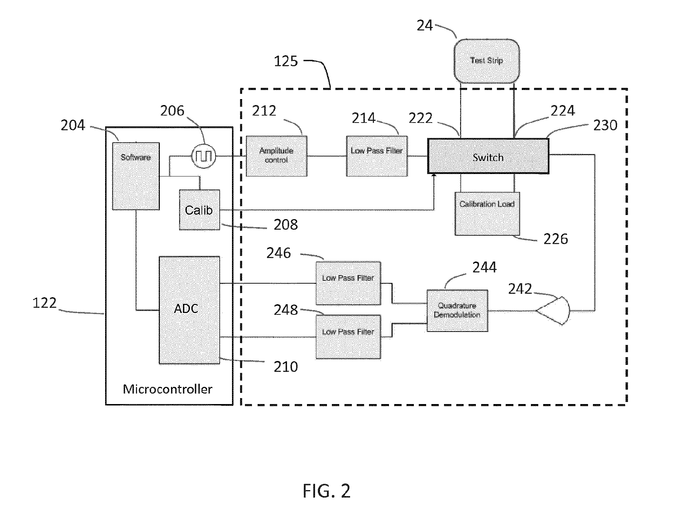

The electronic components of the glucose measurement system 100 can be disposed on, for example, a printed circuit board situated within the housing 11 and forming the data management unit 140 of the herein described system. Figure 1B illustrates, in simplified schematic form, several of the electronic sub-systems disposed within the housing 11 for purposes of this embodiment. The data management unit 140 includes a processing unit 122 in the form of a microprocessor, a microcontroller, an application specific integrated circuit ("ASIC"), a mixed signal processor ("MSP"), a field programmable gate array ("FPGA"), or a combination thereof, and is electrically connected to various electronic modules included on, or connected to, the printed circuit board, as will be described below. The processing unit 122 is electrically connected to, for example, a test strip port circuit 104 via an analog front end sub-system 125, described in more detail below with reference to FIG. 2. The strip port circuit 104 is electrically connected to the strip port connector 22 during blood glucose testing. To measure a selected analyte concentration, the strip port circuit104 detects a resistance across electrodes of analyte test strip 24 having a blood sample disposed thereon, using a potentiostat, and converts an electric current measurement into digital form for presentation on the display 14. The processing unit 122 can be configured to receive input from the strip port circuit 104 and may also perform a portion of the potentiostat function and the current measurement function. As will be described in more detail below, the glucose current measurement is captured at a specific point in time depending on a detected hematocrit level of the sample, in order to improve the accuracy of the blood glucose measurement. Rather than capturing the current measurement at a fixed point in time for every sample provided via the test strip 24, the detected hematocrit level is used to determine an optimal glucose current capture time for better glucose measurement accuracy.

The analyte test strip 24 can be in the form of an electrochemical glucose test strip. The test strip 24 can include one or more working electrodes. Test strip 24 can also include a plurality of electrical contact pads, where each electrode can be in electrical communication with at least one electrical contact pad. Strip port connector 22 can be configured to electrically interface to the electrical contact pads and form electrical communication with the electrodes. Test strip 24 can include a reagent layer that is disposed over at least one electrode. The reagent layer can include an enzyme and a mediator. Exemplary enzymes suitable for use in the reagent layer include glucose oxidase, glucose dehydrogenase (with pyrroloquinoline quinone co-factor, "PQQ"), and glucose dehydrogenase (with flavin adenine dinucleotide co-factor, "FAD"). An exemplary mediator suitable for use in the reagent layer includes ferricyanide, which in this case is in the oxidized form. The reagent layer can be configured to physically transform glucose into an enzymatic by-product and in the process generate an amount of reduced mediator (e.g., ferrocyanide) that is proportional to the glucose concentration. The working electrode can then be used to measure a concentration of the reduced mediator in the form of a current. In turn, strip port circuit 104 can convert the current magnitude into a glucose concentration. An exemplary analyte meter performing such current measurements is described in U.S. Patent Application Publication No. US 1259/0301899 A1 entitled "System and Method for Measuring an Analyte in a Sample", which is incorporated by reference herein as if fully set forth in this application.

A display module 119, which may include a display processor and display buffer, is electrically connected to the processing unit 122 over the communication interface 123 for receiving and displaying output data, and for displaying user interface input options under control of processing unit 122. The structure of the user interface, such as menu options, is stored in user interface module 103 and is accessible by processing unit 122 for presenting menu options to a user of the blood glucose measurement system 100. An audio module 120 includes a speaker 121 for outputting audio data received or stored by the DMU 140. Audio outputs can include, for example, notifications, reminders, and alarms, or may include audio data to be replayed in conjunction with display data presented on the display 14. Such stored audio data can be accessed by processing unit 122 and executed as playback data at appropriate times. A volume of the audio output is controlled by the processing unit 122, and the volume setting can be stored in settings module 105, as determined by the processor or as adjusted by the user. User input module 102 receives inputs via user interface buttons 16 which are processed and transmitted to the processing unit 122 over the communication interface 123. The processing unit 122 may have electrical access to a digital time-of-day clock connected to the printed circuit board for recording dates and times of blood glucose measurements, which may then be accessed, uploaded, or displayed at a later time as necessary.

The display 14 can alternatively include a backlight whose brightness may be controlled by the processing unit 122 via a light source control module 115. Similarly, the user interface buttons 16 may also be illuminated using LED light sources electrically connected to processing unit 122 for controlling a light output of the buttons. The light source module 115 is electrically connected to the display backlight and processing unit 122. Default brightness settings of all light sources, as well as settings adjusted by the user, are stored in a settings module 105, which is accessible and adjustable by the processing unit 122.

A memory module 101, that includes but are not limited to volatile random access memory ("RAM") 112, a non-volatile memory 113, which may comprise read only memory ("ROM") or flash memory, and a circuit 114 for connecting to an external portable memory device via a data port 13, is electrically connected to the processing unit 122 over a communication interface 123. External memory devices may include flash memory devices housed in thumb drives, portable hard disk drives, data cards, or any other form of electronic storage devices. The on-board memory can include various embedded applications executed by the processing unit 122 for operation of the analyte meter 10, as will be explained below. On board memory can also be used to store a history of a user's blood glucose measurements including dates and times associated therewith. Using the wireless transmission capability of the analyte meter 10 or the data port 13, as described below, such measurement data can be transferred via wired or wireless transmission to connected computers or other processing devices.

A wireless module 106 may include transceiver circuits for wireless digital data transmission and reception via one or more internal digital antennas 107, and is electrically connected to the processing unit 122 over communication interface 123. The wireless transceiver circuits may be in the form of integrated circuit chips, chipsets, programmable functions operable via processing unit 122, or a combination thereof. Each of the wireless transceiver circuits is compatible with a different wireless transmission standard. For example, a wireless transceiver circuit 108 may be compatible with the Wireless Local Area Network IEEE 802.11 standard known as WiFi. Transceiver circuit 108 may be configured to detect a WiFi access point in proximity to the analyte meter 10 and to transmit and receive data from such a detected WiFi access point. A wireless transceiver circuit 109 may be compatible with the Bluetooth protocol and is configured to detect and process data transmitted from a Bluetooth "beacon" in proximity to the analyte meter 10. A wireless transceiver circuit 110 may be compatible with the near field communication ("NFC") standard and is configured to establish radio communication with, for example, an NFC compliant point of sale terminal at a retail merchant in proximity to the analyte meter 10. A wireless transceiver circuit 111 may comprise a circuit for cellular communication with cellular networks and is configured to detect and link to available cellular communication towers.

A power supply module 116 is electrically connected to all modules in the housing 11 and to the processing unit 122 to supply electric power thereto. The power supply module 116 may comprise standard or rechargeable batteries 118 or an AC power supply 117 may be activated when the analyte meter 10 is connected to a source of AC power. The power supply module 116 is also electrically connected to processing unit 122 over the communication interface 123 such that processing unit 122 can monitor a power level remaining in a battery power mode of the power supply module 116.

In addition to connecting external storage for use by the analyte meter 10, the data port 13 can be used to accept a suitable connector attached to a connecting lead, thereby allowing the analyte meter 10 to be wired to an external device such as a personal computer. Data port 13 can be any port that allows for transmission of data such as, example, a serial, USB, or a parallel port.

With reference to FIG. 2, there is illustrated an analog front end circuit portion 125 electrically connected to the strip port circuit 104 described above and to the microcontroller 122. Operation of the circuit portion 125 is controlled by the microcontroller 122. In principle, the circuit 125 drives a known electrical sine wave signal through the test strip 24 having a blood sample thereon in order to measure its effect on the magnitude and phase of the electrical sine wave signal applied thereto. The circuit comprises at least two electrical contacts 222 and 224 connected to the electrodes of an inserted test strip 24 having a blood sample thereon. In operation, a square wave generator 206 transmits a square wave signal through an amplitude control block 212, which sets a precise amplitude of the square wave, and through a low pass filter 214 which converts the square wave to a sinusoidal wave. This sine wave input signal is driven through the test strip 24 strip via the electrical contact 222 in electrical communication with a test strip electrode. The electrical properties of the blood sample in the test strip 24 affect the magnitude and phase of the electrical sine wave input signal that passes through it. Depending on properties of the blood sample, e.g. analyte levels in the blood, such as hematocrit, the sample presents a corresponding impedance to the sine wave which, in turn, affects the phase and magnitude of the sine wave passing through it. The affected (modified) sine wave output from a test strip electrode to contact 224 is transmitted through a transimpedance amplifier 242 to condition the signal before it is fed through a quadrature demodulator 244. The quadrature demodulator 244 decomposes the sinusoidal voltage signal into measurable real and imaginary components. These components are each filtered by one of the low pass filters 246, 248 and are received at the ADC 210 in the microcontroller 122. The phase and magnitude of the modified waveforms are calculated by microcontroller 122 according to software programs 204 (as part of data stored in memory module 101) based on the real and imaginary components of the received output signal and on calibration parameters generated during a calibration phase of the circuit 125 (described below). Thus, the analog front end circuit portion 125 drives a known sine wave through the test strip 24 having a blood sample on it to measure its magnitude and phase effects on the applied known sine wave.

During a calibration phase, performed after test strip insertion but before a sample is applied thereto by a user, known calibration load 226 is switched into the circuit 125 by electronic switch 230. Under direction from microcontroller 122, the switch 230 can controllably connect the contacts 222 and 224 to the calibration load 226, or to the test strip 24 for analyte level measurement. Prior to the actual test strip sample analyte measurement, microcontroller 122 selectively connects the contacts 222, 224 to the known calibration load 226 during hardware integrity checks, calibration of impedance circuits with respect to voltage offsets and leakage currents, and the like. The test strip is switched in for actual testing after calibration is completed, wherein the user applies a sample to the test strip for analyte measurement. Calibration parameters generated during this calibration phase are used to adjust the magnitude and phase calculations as described above.

Experiments have shown that a 250 KHz applied sine wave signal has a high phase sensitivity to changes in the hematocrit level of the sample, but is also sensitive to a user's finger contact with the test strip 24. This physical finger contact can severely disrupt detectability of the phase difference between input and output signals. The finger contact is unavoidable as the user must provide the blood sample by direct contact with the test strip, after a finger prick procedure. As will be explained below, desensitizing the circuit 125 from these phase and magnitude effects caused by physical human contact while also maintaining good hematocrit sensitivity, is provided by an embodiment disclosed herein.

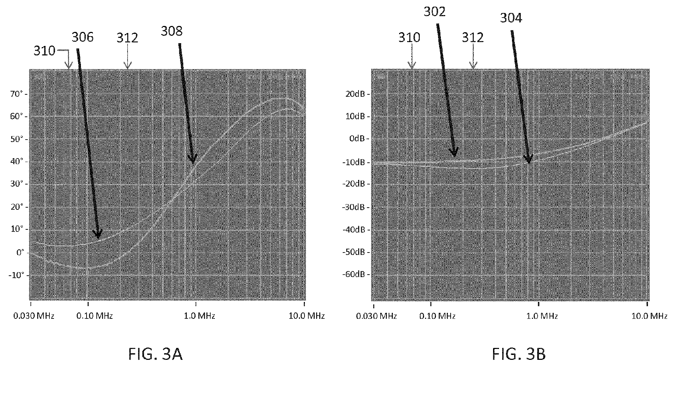

Investigations have also revealed that particular applied sinusoidal frequencies provide sufficient sensitivity to hematocrit levels in the sample while maintaining good immunity to the effects of a user's finger contact with the test strip. Different phase and magnitude plots, as will be described below, at different frequencies establish where in the frequency spectrum such immunity from human body interference may be obtained. With reference to FIGs, 3A and 3B, there are illustrated two graphs of phase (FIG. 3A) and magnitude (FIG. 3B) response curves measured from one test strip having a sample thereon, with and without finger contact over a range of applied sinusoidal frequencies. In the illustrated graphs, the horizontal axes indicate the frequency of the applied electric sine wave signal in a logarithmic scale ranging from 30 KHz to 10 MHz, while the vertical axes indicate changes in measured phase angle (FIG. 3A) and magnitude (FIG. 3B). The approximate 250 kHz points on the horizontal scales are indicated by the arrows 312, and the approximate 77 kHz points on the horizontal scales are indicated by the arrows 310. With respect to the phase response graph on the left (FIG. 3A) each vertical scale division indicates a 10 degree phase shift. The curve 306 indicates the measured output signal phase response of the test strip 24 with a sample thereon and the curve 308 indicates the measured output signal phase response of the test strip 24 with a sample thereon and with finger contact. Similarly, with respect to the magnitude response graph on the right (FIG. 3B) each vertical scale division indicates a step of ten decibels. The curve 302 indicates the measured output signal magnitude response of the test strip 24 with a sample thereon and the curve 304 indicates the measured output signal magnitude response of the test strip 24 with a sample thereon and with finger contact.

With respect to a frequency range of about 50 kHz to about 100 kHz, the capacitance added by the finger contact is a significant fraction of the total test-strip-plus-sample capacitance, and so this contact influences the phase difference as between the input and output sinusoidal signals to a much greater extent, proportionally, than it does the magnitude difference. This is because the added resistance contributed by excess finger contact is proportionally much less than the total test-strip-plus-sample resistance. Thus, the change in magnitude is modified to a much lesser extent by the excess finger contact, and so renders the calculations to determine magnitude relatively immune to the influence of the finger contact on the test strip.

One of the characteristics of the modified output response curves shown in FIGs. 3A and 3B is that the magnitude of the output sine waves (FIG. 3B) is fairly immune to influences made by finger contact in the frequency range of interest. The measured magnitude is responsive to the hematocrit level in the sample. With respect to the output phase response (FIG. 3A), at about 250 kHz, there is about a 10 degree shift (one whole vertical division) in phase response caused by the finger contact. Thus, in one embodiment, magnitude measurement is selected as a basis to determine analyte levels in the sample in order to provide measurement immunity from human body interference. Based on these experimental investigations, in one embodiment a frequency of between about 50 kHz and about 100 kHz was selected as an adequate range for measurement immunity (of magnitude) from finger contact while maintaining sufficient hematocrit sensitivity. Preferably, a frequency of between about 70 kHz and about 80 kHz is selected, and even more preferably, a frequency of about 77 kHz is selected based on test equipment tolerances.

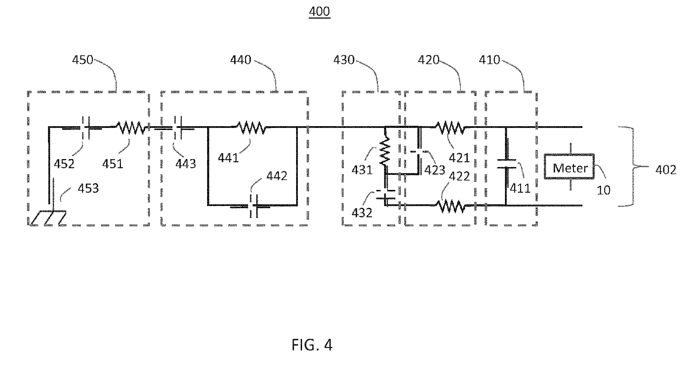

With reference to FIG. 4, there is illustrated an electrical equivalent model 400 of the analyte meter 10 electrically connected to the strip port 22 having a test strip 24 with a blood sample presented thereto by a user. The strip port connector model 410 is represented by a capacitance 411 of about 1 pF between the strip port connector terminals 402. The test strip model 420 is represented by series connected resistors 421, 422 of about 5 kOhms each and a capacitance 423 of about 2 pF. The blood sample model 430 is represented as a resistor 431 of about 60 kOhms and a capacitance 432 of about 400 pF connected in parallel between resistors 421 and 422. These components 410, 420, 430 represent the known electrical characteristics of the analyte meter testing circuit with a blood sample provided thereto because these physical properties are fairly well controlled, e.g., the test strip and strip port connector models, 420 and 410, respectively, are fairly well fixed and the received blood sample is held in a test strip chamber having a size that is well controlled. The variable characteristics of the analyte meter 10 measurement involve the electrical connection between the sample in the test strip 24 in contact with the user's finger, as well as the user's body connected to ground. The model 440 of the blood bridge formed between the test strip and the user's finger is represented by a resistor 441 of about 8 kOhms connected in series to a capacitance 443 of about 125 pF and in parallel to a capacitance 442 of about 2 pF. The connection between the user's body model 450 and ground 453 is represented as a series connected resistance 451 and capacitance 452 of about 3 kOhms and 330 pF, respectively.

The electrical model as shown, which incorporates the test strip 24 and the effect of a person touching it, enables simulation of various analyte meter modifications in a controlled and consistent manner. This model can be used to predict trends and sensitivity to various influences, including design improvements. Finely tuning the passive circuit elements allows realistic responses to be measured and tested. Additionally, the model 400 could be used to predict the performance effect of design changes in the strip electrical parameters and the blood analyte meter without building new strips or prototypes. This helps to identify modifications that may make the system less prone to the effects of a person touching the strip while an assay is being carried out.

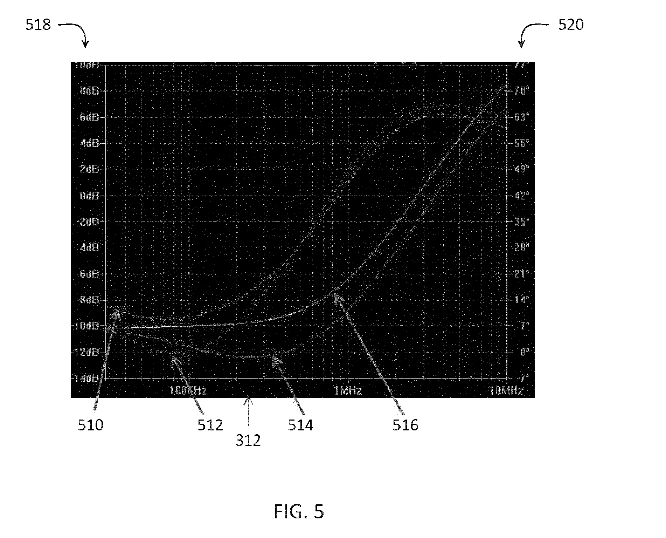

The model circuit of FIG. 4 compares favorably with the real network analysis results, as is illustrated in FIG. 5. The simulation circuit provides outputs that are similar to the actual outputs and so provide a tool for varying electrical parameters and testing their effect on magnitude and phase at various frequencies. The output response curves shown in FIG. 5 are generated by the model simulation circuit of FIG. 4, as described above. The magnitude scale 518 is drawn on the left vertical axis and the phase scale 520 is drawn on the right vertical axis, while the frequency scale ranging from about 30 kHz to about 10 MHz is drawn on the horizontal logarithmic scale. The phase response is illustrated in dashed lines, wherein dashed line 510 is the phase response of the test strip with a sample, and the dashed line 512 is the phase response of the test strip with a sample and with finger contact. At 250 KHz 312 the phase shift simulation is close to the observed phase shift, as illustrated in FIG. 3A. The magnitude response is illustrated in solid lines, wherein solid line 516 is the magnitude response of the test strip with a sample, and the solid line 514 is the phase response of the test strip with a sample and with finger contact. As with the simulated phase response, the magnitude simulation is close to the observed magnitude shift, as illustrated in FIG. 3B.

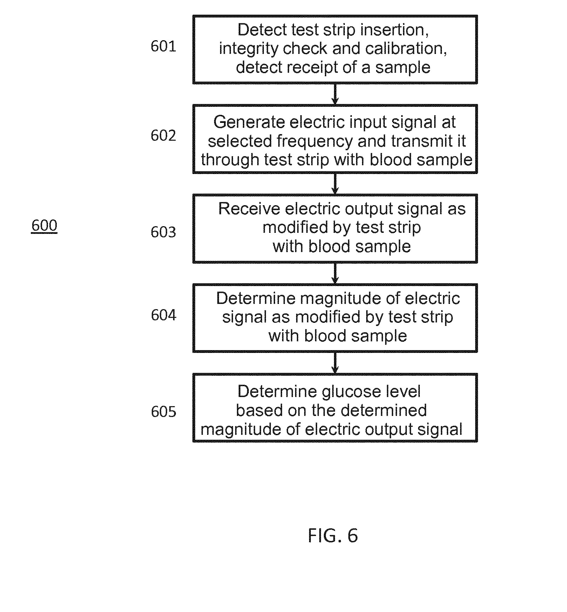

With reference to FIG. 6, there is illustrated an algorithm for operating analyte meter 10 using a microcontroller 122 under program control such as programs and software stored in the software module 204. At step 601 the analyte meter detects insertion of a test strip which initiates integrity checks of circuit hardware, calibration of impedance circuits, and collection of calibration parameters, followed by a user's application of a sample to the test strip. At step 602, an electric input signal of known frequency and amplitude is generated and transmitted through the inserted test strip having a sample thereon. At step 603, an output signal from the test strip, generated in response to the known input signal, is received at the microcontroller 122. Intermediate circuit sub-systems have decomposed the received signal into real and imaginary components which is processed by the microcontroller, at step 604, to calculate a phase change and an amplitude (magnitude) of the output signal. The calibration parameters generated during the calibration phase are used to adjust accuracy of the calculated magnitude of the output signal. At step 605, the calculated magnitude is used to time a glucose current measurement in the sample to determine its glucose level. Because the timing of the glucose current measurement is based on test strip type, a table is stored in the memory of the analyte meter that pertains to the test strip type used for that meter. Hence, a table lookup is performed to determine timing of the glucose current measurement based on the calculated magnitude. Exemplary embodiments of analyte meters employing derived lookup tables are described in PCT Patent Application PCT/GB2012/053279 (Attorney Docket No. DD15246PCT) entitled "Accurate Analyte Measurements for Electrochemical Test Strip Based on Sensed Physical Characteristic(s) of the Sample Containing the Analyte and Derived BioSensor Parameters" and PCT Patent Application PCT/GB2012/053276 (Attorney Docket No. DD15220PCT) entitled "Accurate Analyte Measurements for Electrochemical Test Strip Based on Sensed Physical Characteristic(s) of the Sample Containing the Analyte", both of which patent applications are incorporated by reference herein as if fully set forth herein.

In terms of operation, one aspect of the analyte meter 10 may include a capability for measuring analyte levels in a sample without electrical interference caused by human contact with the test strip containing the sample. Moreover, electrical modeling of the measuring apparatus allows simulation of various analyte meter modifications in a controlled and consistent manner. Additionally, the modeling could be used to predict the performance effect of design changes in the strip electrical parameters and the blood analyte meter without building new strips or prototypes.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "circuit," "circuitry," "module," and/or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible, non-transitory medium that can contain, or store a program for use by or in connection with an instruction execution system, apparatus, or device.

Program code and/or executable instructions embodied on a computer readable medium may be transmitted using any appropriate medium, including but not limited to wireless, wireline, optical fiber cable, RF, etc., or any suitable combination of the foregoing.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Furthermore, the various methods described herein can be used to generate software codes using off-the-shelf software development tools. The methods, however, may be transformed into other software languages depending on the requirements and the availability of new software languages for coding the methods.

### PARTS LIST FOR FIGS. 1A - 6

- 10: analyte meter
- 11: housing, meter
- 13: data port
- 14: display
- 16: user interface buttons
- 22: strip port connector
- 24: test strip
- 100: analyte measurement system
- 101: memory module
- 102: buttons module
- 103: user interface module
- 104: strip port module
- 105: microcontroller settings module
- 106: transceiver module
- 107: antenna
- 108: WiFi module
- 109: Bluetooth module
- 110: NFC module
- 111: GSM module
- 112: RAM module
- 113: ROM module
- 114: external storage
- 115: light source module
- 116: power supply module
- 117: AC power supply
- 118: battery power supply
- 119: display module
- 120: audio module
- 121: speaker
- 122: microcontroller (processing unit)
- 123: communication interface
- 125: test strip analyte module - analog front end
- 140: data management unit
- 204: software
- 206: squarewave generator
- 208: calibration control
- 210: analog-to-digital converter (ADC)
- 212: amplitude control
- 214: low pass filter
- 222: test strip electrode
- 224: test strip electrode
- 226: calibration load
- 230: switch
- 242: transimpedance amplifier
- 244: quadrature demodulator
- 246: low pass filter
- 248: low pass filter
- 302: magnitude response of strip with blood sample
- 304: magnitude response of strip with blood sample and finger contact
- 306: phase response of strip with blood sample
- 308: phase response of strip with blood sample and finger contact
- 310: 77 KHz point
- 312: 250 KHz point
- 400: circuit model
- 402: strip port connector terminals
- 410: strip port connector electric model
- 411: capacitance
- 420: test strip electric model
- 421: resistance
- 422: resistance
- 423: capacitance
- 430: test-strip-plus-sample electric model
- 431: resistance
- 432: capacitance
- 440: finger-to-test strip sample electric model
- 441: resistance
- 442: capacitance
- 443: capacitance
- 450: body-to-ground electric model
- 451: resistance
- 452: capacitance
- 453: circuit ground
- 510: phase response of strip with sample
- 512: phase response of strip with sample and finger contact
- 514: magnitude response of strip with sample and finger contact
- 516: magnitude response of strip with sample
- 518: magnitude scale (decibels)
- 520: phase scale (degrees)
- 600: method of operating analyte meter
- 601: step - detect test strip insertion, integrity check and calibration, detect sample
- 602: step - transmit electric input signal through test strip
- 603: step - receive electric output signal from test strip
- 604: step - determine magnitude of received electric signal605 step - determine glucose level based on determined magnitude

While the invention has been described in terms of particular variations and illustrative figures, those of ordinary skill in the art will recognize that the invention is not limited to the variations or figures described. In addition, where methods and steps described above indicate certain events occurring in certain order, those of ordinary skill in the art will recognize that the ordering of certain steps may be modified and that such modifications are in accordance with the variations of the invention. Additionally, certain of the steps may be performed concurrently in a parallel process when possible, as well as performed sequentially as described above. Therefore, to the extent there are variations of the invention, which are within the spirit of the disclosure or equivalent to the inventions found in the claims, it is the intent that this patent will cover those variations as well.

A non-exhaustive list of various aspects of the invention is set out in the following numbered clauses:
Clause 1. An analyte meter comprising:
   an analyte port for receiving a test strip, the test strip comprising electrodes and the analyte port comprising contacts for electrically contacting the electrodes of the test strip, the test strip further comprising a chamber for receiving a blood sample from a user's finger touching the test strip;
   an electric circuit connected to the contacts, wherein the electric circuit is configured to generate a sinusoidal electric signal, to transmit the sinusoidal electric signal through the test strip and through the sample via the contacts, to receive a sinusoidal electric response from the test strip generated by the sinusoidal electric signal, and wherein the electric circuit comprises means for minimizing effects on the sinusoidal electric response caused by the user's finger touching the test strip; and
   a processing unit connected to the electric circuit, the processing unit configured to receive the sinusoidal electrical response from the test strip, the sinusoidal electrical response comprising a measurable magnitude that is representative of a first analyte level of the blood sample, and wherein the processing unit is configured to determine a second analyte level of the blood sample based on the measured magnitude of the sinusoidal electrical response.
Clause 2. The analyte meter of clause 1, wherein the sinusoidal electrical response comprises a magnitude different from a magnitude of the sinusoidal electric signal.
Clause 3. The analyte meter of clause 2, wherein the sinusoidal electrical signal comprises a frequency between about 50 kHz and about 100 kHz.
Clause 4. The analyte meter of clause 2, wherein the sinusoidal electrical signal comprises a frequency between about 70 kHz and about 80 kHz.
Clause 5. The analyte meter of clause 2, wherein the sinusoidal electrical signal comprises a frequency at about 77 kHz.
Clause 6. The analyte meter of clause 1, wherein the first analyte level of the sample is a hematocrit level, and the second analyte level of the sample is a glucose level.
Clause 7. The analyte meter of clause 1, further comprising:
   a square wave generator controlled by the processing unit, the square wave generator configured to generate an electric signal at a frequency of the sinusoidal electric signal; and
   a demodulation circuit electrically connected to the processing unit and to the electric circuit, the demodulation circuit receiving the sinusoidal electrical response to decompose it into real and imaginary components, and to transmit the real and imaginary components to the processing unit.
Clause 8. A method of operating an analyte meter, the method comprising:
   detecting insertion of a test strip into the analyte meter;
   providing a sample onto the test strip based upon finger contact therewith;
   driving a known electric input signal through the test strip, the known electric input signal having a frequency between about 50 kHz to about 100 kHz;
   measuring magnitude and phase characteristics of an electric output signal received from the test strip in response to the electric input signal; and
   determining an analyte level of the sample based on the magnitude of the electric output signal in order to minimize finger contact influence on the analyte level results.
Clause 9. The method of clause 8, wherein the signal driving step comprises driving a sinusoidal electric input signal having a known amplitude and frequency.
Clause 10. The method of clause 8, wherein the signal driving step comprises driving a sinusoidal electric input signal having a frequency of between about 70 kHz and about 80 kHz.
Clause 11. The method of clause 8, wherein the signal driving step comprises driving a sinusoidal electric input signal having a frequency of about 77 kHz.
Clause 12. The method of clause 8, wherein the signal driving step comprises generating a square wave signal using a square wave generator and converting the square wave signal into a sinusoidal signal using a filter.
Clause 13. The method of clause 12, wherein the magnitude and phase measuring step comprises decomposing the electric output signal into real and imaginary components using a demodulation circuit.
Clause 14. A simulation circuit comprising:
   a first circuit portion configured to simulate electrical characteristics of a test strip inserted in an analyte meter, the test strip having a sample thereon; and
   a second circuit portion connected to the first circuit portion, the second circuit portion configured to simulate electrical characteristics of a finger of a user in contact with the test strip.
Clause 15. The simulation circuit of clause 14, further comprising a third circuit portion connected to the second circuit portion, the third circuit portion configured to simulate an electrically grounded body of the user.
Clause 16. The simulation circuit of clause 14, wherein the first circuit portion comprises two electrical terminals having a strip port capacitor connected therebetween to simulate electrical characteristics of a strip port connector of the analyte meter.
Clause 17. The simulation circuit of clause 14, wherein the first circuit portion further comprises two test strip resistors each connected to a different one of the electrical terminals in parallel with the strip port capacitor, and a test strip capacitor connected between the two test strip resistors, to simulate electrical characteristics of the test strip.
Clause 18. The simulation circuit of clause 17, wherein the first circuit portion further comprises a sample resistor connected in parallel with the test strip capacitor to a first one of the test strip resistors and to one terminal of a sample capacitor, the other terminal of the sample capacitor connected to a second one of the test strip resistors, the sample resistor and the sample capacitor for simulating electrical characteristics of the test strip having a sample thereon.
Clause 19. The simulation circuit of clause 18, wherein the second circuit portion comprises:
   a finger resistor and a first finger capacitor connected in parallel to a node of the first circuit portion, the node of the first circuit portion connected in parallel to the first one of the test strip resistors, the strip capacitor, and the sample resistor; and
   a second finger capacitor connected in parallel to the finger resistor and the first finger capacitor opposite the node of the first circuit.
Clause 20. The simulation circuit of clause 19, further comprising a third circuit portion connected to the second circuit portion, the third circuit portion configured to simulate an electrically grounded body of the user.
Clause 21. The simulation circuit of clause 20, wherein the third circuit portion comprises a body resistor connected in series with a body capacitor between the second circuit portion and ground.
Clause 22. The simulation circuit of claim 21, wherein the strip port capacitor, the test strip capacitor, and the two test strip resistors each comprise preselected fixed sizes for simulating the test strip inserted in the analyte meter.
Clause 23. The simulation circuit of clause 22, wherein the finger resistor, the first and second finger capacitors, the body resistor, and the body capacitor each comprise variable sizes configured to simulate operation of the analyte meter during an assay.
Clause 24. A method of manufacturing an analyte meter capable of effectively minimizing the influence of finger contact electrically on a test strip used in conjunction with the test meter, the method comprising:
   disposing a square wave generator in a housing of the meter to generate a square wave signal having a frequency between about 50 kHz and about 100kHz;
   connecting a first low pass filter circuit to the square wave generator for converting the square wave signal to a sinusoidal signal;
   connecting electrodes to the first low pass filter for driving the sinusoidal signal through a test strip brought into electrical contact with the electrodes;
   connecting a demodulation circuit and a second low pass filter circuit to the electrodes for receiving an electrical output from the test strip and for decomposing the electrical output, the electrical output generated in the test strip in response to the sinusoidal signal;
   connecting a processing unit to the second low pass filter circuit; and
   programming the processing unit to calculate a magnitude of the decomposed electrical output.
Clause 25. The method of manufacturing of clause 24, further comprising programming the processing unit to calculate an analyte level of a sample in the test strip based on the calculated magnitude of the decomposed electrical output.
Clause 26. The method of manufacturing of clause 24, wherein the square wave generator generates a square wave signal having a frequency between about 70 kHz and about 80 kHz.
Clause 27. The method of manufacturing of clause 24, wherein the square wave generator generates a square wave signal having a frequency at about 77 kHz.
Clause 28. A portable analyte test meter for use with an associated analytical test strip in the determination of a hematocrit concentration of a blood sample applied to the test strip through finger contact, said test meter comprising:
   a housing;
   a port for receiving the associated analytical test strip;
   a low pass filter circuit block disposed in the housing;
   a square wave generator circuit block disposed in the housing and connected to the low pass filter circuit block, the square wave generator configured to generate a square wave at a frequency in the range of about 70 kHz to about 80 kHz and to transmit the generated square wave signal to the associated analytical test strip in the port via the low pass filter circuit block; and
   a processing block configured to calculate a magnitude of a signal received from the associated analytical test strip, wherein the signal received from the associated analytical test strip originated from the generated square wave.
Clause 29. The portable analyte test meter of clause 28, wherein the port comprises electrodes for electrically connecting to the associated analytical test strip.
Clause 30. The portable analyte test meter of clause 29, wherein the magnitude of the signal received from the associated analytical test strip indicates the hematocrit concentration and wherein the processing block calculates the hematocrit concentration based on the magnitude of the signal.
Clause 31. The portable analyte test meter of clause 28, wherein the associated analytical test strip comprises a chamber having a sample therein.
Clause 32. The portable analyte test meter of clause 28, wherein the low pass filter block is configured to transform the square wave signal into a sinusoidal signal.
Clause 33. A method for employing a portable analyte test meter with an analytical test strip onto which a blood sample is applied using finger contact therewith, said method comprising:
   receiving said analytical test strip into a port of said portable analyte test meter;
   generating a square wave at a frequency in the range of about 70 kHz to about 80 kHz using a square wave generator circuit block;
   transmitting the generated square wave signal to said inserted analytical test strip via a low pass filter;
   measuring the magnitude of a signal generated from the analytical test strip at said generated frequency so as to minimize the electrical effects of excess finger contact with said strip; and
   determining an analyte concentration of the blood sample applied to the analytical test strip based on the measured magnitude.
Clause 34. The method of clause 33, wherein the transmitting step comprises converting the generated square wave signal into a sinusoidal signal.
Clause 35. The method of clause 34, wherein the receiving step comprises connecting electrodes of the test meter to the analytical test strip.
Clause 36. The method of clause 35, wherein the transmitting step comprises transmitting the sinusoidal signal into the blood sample.

## Claims

1. An analyte meter comprising:
an analyte port for receiving a test strip, the test strip comprising electrodes and the analyte port comprising contacts for electrically contacting the electrodes of the test strip, the test strip further comprising a chamber for receiving a blood sample from a user's finger touching the test strip;
an electric circuit connected to the contacts, wherein the electric circuit is configured to generate a sinusoidal electric signal, to transmit the sinusoidal electric signal through the test strip and through the sample via the contacts, to receive a sinusoidal electric response from the test strip generated by the sinusoidal electric signal, and wherein the electric circuit comprises means for minimizing effects on the sinusoidal electric response caused by the user's finger touching the test strip; and
a processing unit connected to the electric circuit, the processing unit configured to receive the sinusoidal electrical response from the test strip, the sinusoidal electrical response comprising a measurable magnitude that is representative of a first analyte level of the blood sample, and wherein the processing unit is configured to determine a second analyte level of the blood sample based on the measured magnitude of the sinusoidal electrical response.

2. The analyte meter of claim 1, wherein the sinusoidal electrical response comprises a magnitude different from a magnitude of the sinusoidal electric signal.

3. The analyte meter of claim 2, wherein the sinusoidal electrical signal comprises a frequency between about 50 kHz and about 100 kHz.

4. The analyte meter of claim 2, wherein the sinusoidal electrical signal comprises a frequency between about 70 kHz and about 80 kHz.

5. The analyte meter of claim 2, wherein the sinusoidal electrical signal comprises a frequency at about 77 kHz.

6. The analyte meter of claim 1, wherein the first analyte level of the sample is a hematocrit level, and the second analyte level of the sample is a glucose level.

7. The analyte meter of claim 1, further comprising:
a square wave generator controlled by the processing unit, the square wave generator configured to generate an electric signal at a frequency of the sinusoidal electric signal; and
a demodulation circuit electrically connected to the processing unit and to the electric circuit, the demodulation circuit receiving the sinusoidal electrical response to decompose it into real and imaginary components, and to transmit the real and imaginary components to the processing unit.
